(19) Europäisches Patentamt

European Patent Office

Office européen des brevets

(11) **EP 4 749 323 A1**

(12) **EUROPEAN PATENT APPLICATION**

(43) Date of publication:
**27.05.2026 Bulletin 2026/22**

(21) Application number: **25217368.7**

(22) Date of filing: **20.11.2025**

(51) International Patent Classification (IPC):
**G01S 7/40** (2006.01)      **G01S 13/42** (2006.01)
**G01S 13/931** (2020.01)

(52) Cooperative Patent Classification (CPC):
**G01S 13/42; G01S 7/403; G01S 13/931;**
G01S 2013/932; G01S 2013/93271

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.11.2024 KR 20240168046**

(71) Applicant: **bitsensing Inc**
**Seongnam-si, Gyeonggi-do 13105 (KR)**

(72) Inventors:
• **LEE, Hyeon Kyu**
  **13504 Seongnam-si, Gyeonggi-do (KR)**
• **JIN, Ho Young**
  **16512 Suwon-si, Gyeonggido (KR)**

(74) Representative: **BCKIP Part mbB**
**MK1**
**Landsbergerstraße 98, 3.Stock**
**80339 München (DE)**

(54) **METHOD FOR DERIVING ADJUSTMENT ANGLE FOR RADAR SENSOR INSTALLED IN VEHICLE**

(57)      A method for deriving an adjustment angle for a radar sensor installed in a vehicle, includes transmitting radar signals through the radar sensor during the driving of the vehicle; receiving radar signals reflected from a target; generating point cloud data based on the received radar signals; deriving adjustment feature information based on the point cloud data; performing fitting of the adjustment feature information with respect to a cosine graph; deriving an adjustment angle based on the fitted adjustment feature information; and post-processing the point cloud data based on the derived adjustment angle.

*FIG. 3*

EP 4 749 323 A1

# EP 4 749 323 A1

## Description

### CROSS-REFERENCE TO RELATED APPLICATION

This application claims the benefit under 35 USC 119(a) of Korean Patent Applications No. 10-2024-0168046 filed on Nov 22, 2024 in the Korean Intellectual Property Office, the entire disclosures of which are incorporated herein by reference for all purposes.

### TECHNICAL FIELD

The present disclosure relates to a method for deriving an adjustment angle for a radar sensor installed in a vehicle.

### BACKGROUND

In general, compact automotive radar sensors have designs and technical requirements that differ from those of military or meteorological radars, and a highly advanced technical approach is required to achieve high performance within a limited space.

In a vehicle driving environment, a mounting angle of a radar sensor is highly likely to be changed due to factors, such as external obstacles, collisions, and road inclinations. Such variations in the mounting angle may cause physical misalignment of the radar sensor's position, resulting in difficulty in accurately obtaining information on the position and velocity of a detected object.

In particular, when the mounting angle of the radar sensor is misaligned, the reliability of long-range sensing performance can be significantly degraded. Even a slight angular variation at high speed may critically affect the distance measurement accuracy and object recognition performance of the automotive radar sensor.

Prior art document/ Patent document

Patent document 1: Korean Patent No. 10-1746759 (registered on June 7, 2017)

### SUMMARY

In view of the foregoing, the present disclosure is conceived to provide a method for deriving an adjustment angle by deriving adjustment feature information based on point cloud data generated based on radar signals reflected from a target and periodically adjusting a horizontal angle of a radar sensor, which is mounted in a software manner, based on the adjustment feature information.

The problems to be solved by the present disclosure are not limited to the above-described problems. There may be other problems to be solved by the present disclosure.

According to an exemplary embodiment, a method for deriving an adjustment angle for a radar sensor installed in a vehicle, may include transmitting radar signals through the radar sensor during the driving of the vehicle; receiving radar signals reflected from a target; generating point cloud data based on the received radar signals; deriving adjustment feature information based on the point cloud data; performing fitting of the adjustment feature information with respect to a cosine graph; deriving an adjustment angle based on the fitted adjustment feature information; and post-processing the point cloud data based on the derived adjustment angle.

According to another exemplary embodiment, a device for deriving an adjustment angle for a radar sensor installed in a vehicle, may include transmit unit configured to transmit radar signals through the radar sensor during the driving of the vehicle; receive unit configured to radar signals reflected from a target; point cloud unit configured to generate point cloud data based on the received radar signals; adjustment feature information deriving unit configured to derive adjustment feature information based on the point cloud data; fitting unit configured to perform fitting of the adjustment feature information with respect to a cosine graph; deriving an adjustment angle based on the fitted adjustment feature information; and post-processing unit configured to post-process the point cloud data based on the derived adjustment angle.

According to another exemplary embodiment, a computer program stored in a computer-readable storage medium including a sequence of instructions for deriving an adjustment angle for a radar sensor installed in a vehicle, wherein the computer program includes a sequence of instructions that, when executed by a computing device, causes the computing device to transmit radar signals through the radar sensor during the driving of the vehicle; receive radar signals reflected from a target; generate point cloud data based on the received radar signals; derive adjustment feature information based on the point cloud data; perform fitting of the adjustment feature information with respect to a cosine graph; derive an adjustment angle based on the fitted adjustment feature information; and post-process the point cloud data based on the derived adjustment angle

This summary is provided by way of illustration only and should not be construed as limiting in any manner. Besides the above-described exemplary embodiments, there may be additional exemplary embodiments that become apparent by reference to the drawings and the detailed description that follows.

According to an embodiment of the present disclosure, there is provided a configuration in which adjustment feature information is derived based on point cloud data, the adjustment feature information is fitted with respect to a cosine graph, and an adjustment angle is derived based on the fitted adjustment feature information. Accordingly, an adjustment angle for a radar sensor can be derived. Also, a horizontal angle of the radar sensor mounted in a software manner can be periodically adjusted based on the adjustment angle. Thus, it is possible to contribute to improvement in object recognition performance.

## BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.

FIG. 1 is a block diagram of an adjustment angle derivation device according to an embodiment of the present disclosure.

FIG. 2 is a diagram illustrating a method for deriving a stationary target according to an embodiment of the present disclosure.

FIG. 3 is a diagram illustrating a method for performing fitting with respect to a cosine graph according to an embodiment of the present disclosure.

FIG. 4 is a flowchart illustrating a method for deriving an adjustment angle for a radar sensor installed in a vehicle according to an embodiment of the present disclosure.

## DETAILED DESCRIPTION

Hereinafter, embodiments of the present disclosure will be described in detail with reference to the accompanying drawings to be readily implemented by a person with ordinary skill in the art to which the present disclosure belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, when a member is said to be located "on" another member, this includes not only the case where the member is in contact with the other member, but also the case where another member exists between the two members.

Through the whole document, when a part "comprises or includes" a certain components, this means that it may further include other components rather than excluding other components unless specifically stated to the contrary.

As used through the whole document, the terms "about", "substantially", etc. are used to mean at or close to that value when manufacturing and material tolerances inherent to the stated meaning are presented, it is used to prevent unscrupulous infringers from taking unfair advantage of disclosures in which precise or absolute figures are mentioned to help understanding of the present disclosure. The term "step of" as used through the whole document does not mean "step for."

Throughout the whole document, the term "combination(s) of" included in Markush type description means mixture or combination of one or more components, steps, operations and/or elements selected from a group consisting of components, steps, operation and/or elements described in Markush type and thereby means that the disclosure includes one or more components, steps, operations and/or elements selected from the Markush group.

Through the whole document, references to "A and/or B" mean "A or B, or A and B."

Hereinafter, embodiments of the present disclosure will be described in detail with reference to the accompanying drawings. However, the present disclosure may not be limited to these implementations, examples, and drawings.

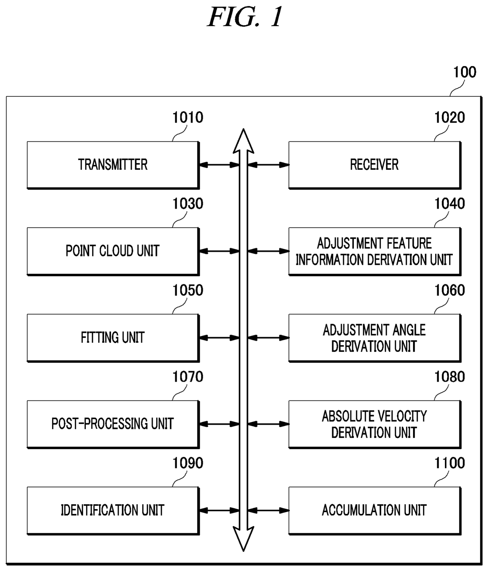

FIG. 1 is a block diagram of an adjustment angle derivation device 100 according to an embodiment of the present disclosure. However, the adjustment angle derivation device 100 illustrated in FIG. 1 is merely an embodiment of the present disclosure, and various modifications based on the components illustrated in FIG. 1 are possible.

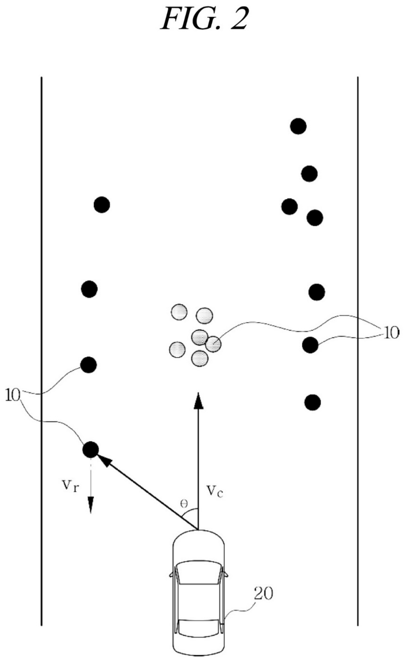

Referring to FIG. 2, the adjustment angle derivation device 100 derives an adjustment angle to optimize the performance of a radar sensor installed in a vehicle 20, and may transmit radar signals through the radar sensor during the driving of the vehicle 20.

The radar sensor detects a target 10 located within a predetermined range using the radar signals, and provides a function of identifying the position and velocity of an object by measuring its distance from the target 10.

The adjustment angle derivation device 100 may receive radar signals reflected from the target 10.

Based on the received radar signals, the adjustment angle derivation device 100 may generate point cloud data.

The point cloud data enables real-time identification of the position, size, and distance of the target 10, and may be a collection of points that represent a surface of an object in space. Each point is generally expressed as X, Y, and Z coordinates and may optionally include additional information, such as color or reflectivity. The point cloud data may represent the position, size, and shape of the target 10 in three dimensions.

For example, the point cloud data may include at least one of coordinate information of the target 10, relative velocity information of the target 10, and azimuth and angular velocity information of the target 10.

A range rate (or radial velocity) of the target 10 may be derived based on the point cloud data. For example, the range rate may include one of a rate of change in distance, a rate of change in position of the target 10 from which the radar signals are reflected, or a velocity of change in distance according to the angle.

The adjustment angle derivation device 100 may derive an absolute velocity of the point cloud data based on a velocity of the vehicle 20 and a relative velocity of the point cloud data.

The adjustment angle derivation device 100 may also identify whether the target 10 is a stationary target based on the derived absolute velocity and a predetermined stationary target classification parameter.

Furthermore, the adjustment angle derivation device 100 may accumulate point cloud data corresponding to the target 10 identified as a stationary target based on predetermined azimuth information.

The adjustment angle derivation device 100 may derive adjustment feature information based on the point cloud data.

The adjustment feature information may be used to perform software-based correction of the horizontal angle of the radar sensor installed in the vehicle 20.

The adjustment angle derivation device 100 may derive the velocity of the vehicle 20 based on the point cloud data and the range rate of the point cloud data. Also, the adjustment angle derivation device 100 may derive the adjustment feature information based on the velocity of the vehicle 20 and the range rate.

The velocity of the vehicle 20 may correspond to a wheel speed, but is not limited thereto.

The adjustment angle derivation device 100 may perform fitting of the adjustment feature information with respect to a cosine graph.

For example, the adjustment angle derivation device 100 may perform fitting by applying a Levenberg-Marquardt algorithm to the cosine graph based on the derived adjustment feature information.

Then, the adjustment angle derivation device 100 may derive an adjustment angle based on the fitted adjustment feature information.

For example, the adjustment angle derivation device 100 may determine whether the adjustment feature information corresponding to a specific angle follows a curve corresponding to the cosine graph, and may derive the adjustment angle accordingly.

For example, the adjustment angle derivation device 100 may perform correlation coefficient analysis between the estimated cosine graph corresponding to the fitted adjustment feature information and a cosine graph with a phase of 0°, derive an adjustment angle corresponding to the maximum correlation coefficient, and consider the derived adjustment angle as the horizontal angle by which the radar sensor is physically misaligned.

The adjustment angle derivation device 100 may post-process the point cloud data based on the derived adjustment angle.

For example, the adjustment angle derivation device 100 may perform software-based horizontal correction of physical misalignment of the radar sensor by applying the derived adjustment angle to the point cloud data. Also, by repeatedly estimating the adjustment angle, the adjustment angle derivation device 100 may apply a smoothing technique to the derived adjustment angle to reduce noise, and may apply a data management technique to enable stable prediction of a horizontal misalignment angle.

The adjustment angle derivation device 100 may include a transmitter 1010, a receiver 1020, a point cloud unit 1030, an adjustment feature information derivation unit 1040, a fitting unit 1050, an adjustment angle derivation unit 1060, a post-processing unit 1070, an absolute velocity derivation unit 1080, an identification unit 1090, and an accumulation unit 1100. However, the adjustment angle derivation device 100 illustrated in **FIG. 1** is merely an embodiment of the present disclosure, and various modifications based on the components illustrated in **FIG. 1** are possible.

The transmitter 1010 may transmit radar signals to the target 10 located within a predetermined range through the radar sensor during the driving of the vehicle 20.

The receiver 1020 may receive radar signals reflected from the target 10.

The target 10 may refer to a specific object or object of interest sensed by the radar sensor, and may include both stationary and non-stationary objects.

The point cloud unit 1030 may collect signals received through the radar sensor, convert them into data, and generate point cloud data based on the received radar signals.

**FIG. 2** is a diagram illustrating a method for deriving a stationary target according to an embodiment of the present disclosure.

Referring to **FIG. 2,** the absolute velocity derivation unit 1080 may derive an absolute velocity of the point cloud data based on a velocity of the vehicle 20 and a relative velocity of the point cloud data.

Herein, the velocity of the vehicle 20 may correspond to a wheel speed, but is not limited thereto.

According to Equation 1, the absolute velocity of the point cloud data can be derived by synthesizing the velocity of the vehicle 20 and the relative velocity of the point cloud data.

[Equation 1]

$$v_{abs} = v_r + v_{c_x} \cdot \cos(\theta) + v_{c_y} \cdot \sin(\theta)$$

Herein, $v_{abs}$ is the absolute velocity of the corresponding point cloud data (*i.e.,* the target 10 corresponding to the point cloud data), $v_r$ is the relative velocity of the point cloud data (*i.e.*, the target 10 corresponding to the point cloud data), $v_c$ is the velocity of the vehicle 20 equipped with the radar sensor, and $\theta$ is the azimuth of the target 10 corresponding to the point cloud data.

The identification unit 1090 may identify whether the target 10 is a stationary target based on the derived absolute velocity and a predetermined stationary target classification parameter.

[Inequation 2]

$$|v_{abs}| < \epsilon$$

According to Inequation 2, the target 10 can be identified as a stationary target by comparing the absolute velocity of the point cloud data with the predetermined stationary target classification parameter.

Herein, $v_{abs}$ is the absolute velocity derived from Equation 1. Also, $\epsilon$ is the stationary target classification parameter. When the stationary target classification parameter is greater than the absolute velocity of the point cloud data corresponding to the target 10, the target 10 is classified as a stationary target.

For example, the absolute velocity derivation unit 1080 may derive the absolute velocity of the point cloud data as shown in Equation 1 based on the velocity of the vehicle 20 and the relative velocity of the point cloud data, and the identification unit 1090 may identify whether the target 10 is a stationary target by comparing the derived absolute velocity with the predetermined stationary target classification parameter as shown in Inequation 2.

Referring back to **FIG. 1,** the accumulation unit 1100 may accumulate point cloud data corresponding to the target 10 identified as a stationary target based on predetermined azimuth information.

The adjustment feature information derivation unit 1040 may derive adjustment feature information based on the point cloud data.

Herein, the adjustment feature information is used to perform software-based correction of the horizontal misalignment angle of the radar sensor based on the point cloud data. The adjustment feature information may be used to determine whether it follows the shape of a cosine graph at a specific angle in order to derive the adjustment angle.

The adjustment feature information derivation unit 1040 may derive the velocity of the vehicle 20 based on the point cloud data and the range rate of the point cloud data.

The adjustment feature information derivation unit 1040 may derive the adjustment feature information based on the velocity (wheel speed) of the vehicle 20 and the range rate according to Equation 3.

[Equation 3]

$$\text{adjustment feature information} = \frac{Range\ Rate}{Wheel\ Speed}$$

The range rate refers to a value representing a rate of change in distance over time, and may be derived by analyzing the Doppler effect of radar signals reflected from the target 10. By using a Doppler frequency shift, a relative velocity between a target and a radar sensor can be calculated and converted into the range rate between them. In particular, the range rate may represent a radial velocity, *i.e.*, how fast the senor or object approaches or moves away from the other. For example, when an autonomous vehicle tracks a specific object, the velocity at which the object approaches or moves away from the vehicle can be expressed as the range rate. For example, a negative range rate indicates that the sensor is approaching the object.

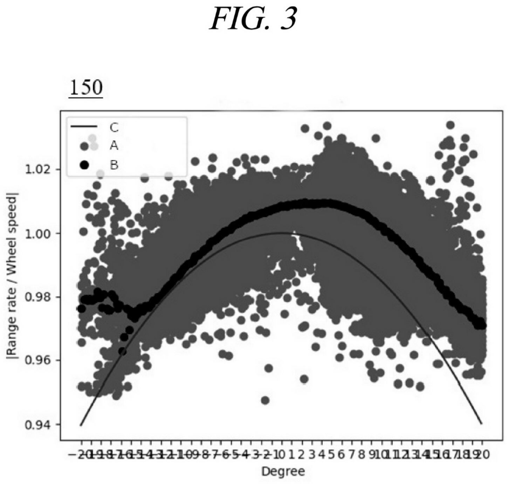

**FIG. 3** is a diagram illustrating a method for performing fitting with respect to a cosine graph according to an embodiment of the present disclosure.

Referring to **FIG. 3,** the fitting unit 1050 may perform fitting of adjustment feature information with respect to a cosine graph.

For example, the fitting unit 1050 may calculate a median value for each angle based on the adjustment feature information derived from the point cloud, and may derive main features of the adjustment feature information based on the calculated median values. In this case, the derived main features may represent a cosine graph pattern. Thereafter, the fitting unit 1050 may perform fitting to an ideal cosine graph by applying an algorithm, such as a Levenberg-Marquardt algorithm, to the main features representing the cosine graph pattern to perform optimization.

In **FIG. 3,** an ideal cosine graph C represents changes in ideal cosine values according to the angle, and corresponds to ideal prediction values for accurate radar signal detection. The ideal cosine graph C indicates how the ratio of the range rate to the velocity of the vehicle 20 should change at a specific angle according to the azimuth of the generated point cloud data.

Adjustment feature information A is derived based on point cloud data corresponding to stationary targets measured by the point cloud unit 1030 and accumulated by the accumulation unit 1100, and may represent the ratio of the range rate to the velocity of the vehicle 20 measured at a specific angle. The adjustment feature information A may be compared with the ideal cosine graph C to determine how closely the actual data matches the ideal and to derive an adjustment angle.

A predicted value B is derived based on the fitted adjustment feature information, and may be derived based on the measured point cloud data and the cosine graph.

The adjustment angle derivation unit 1060 may apply the Levenberg-Marquardt algorithm to the main features representing the cosine graph pattern derived from the fitted adjustment feature information to perform optimization, and may derive the adjustment angle using the refined fitted adjustment feature information.

For example, the adjustment angle derivation unit 1060 may confirm whether the adjustment feature information corresponding to a specific angle follows a cosine graph curve, and may derive the adjustment angle accordingly.

The adjustment angle derivation unit 1060 may perform correlation coefficient analysis between the estimated cosine graph corresponding to the fitted adjustment feature information and a cosine graph with a phase of 0°, derive an adjustment angle corresponding to the maximum correlation coefficient, and consider the derived adjustment angle as a horizontal angle by which the radar sensor is physically misaligned.

The post-processing unit 1070 may post-process the point cloud data based on the derived adjustment angle.

For example, the post-processing unit 1070 may perform software-based horizontal correction of physical misalignment of the radar sensor by applying the derived adjustment angle to the point cloud data. Furthermore, by repeatedly estimating the adjustment angle, a smoothing technique may be applied to the derived angle to reduce noise, and data management techniques may be employed to stably predict the horizontal tilt angle. Also, by repeatedly estimating the adjustment angle, the adjustment angle derivation device 100 may apply a smoothing technique to the derived adjustment angle to reduce noise, and may apply a data management technique to enable stable prediction of a horizontal misalignment angle.

The smoothing technique can be used for data processing to reduce noise and enhance continuity in the adjustment angle.

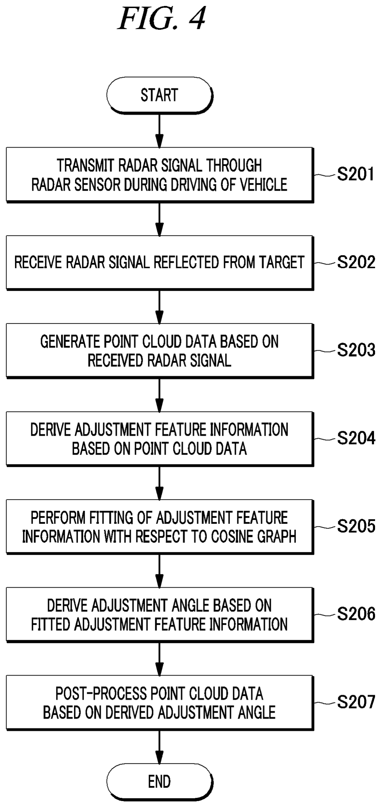

**FIG. 4** is a flowchart illustrating a method for deriving an adjustment angle for a radar sensor installed in a vehicle by the adjustment angle derivation device 100 according to an embodiment of the present disclosure.

Referring to **FIG. 4,** in a process S201, the adjustment angle derivation device 100 may transmit radar signals through a radar sensor during the driving of the vehicle 20.

In a process S202, the adjustment angle derivation device 100 may receive radar signals reflected from a target.

In a process S203, the adjustment angle derivation device 100 may generate point cloud data based on the received radar signals.

In a process S204, the adjustment angle derivation device 100 may derive adjustment feature information based on the point cloud data.

In a process S205, the adjustment angle derivation device 100 may perform fitting of the adjustment feature information with respect to a cosine graph.

In a process S206, the adjustment angle derivation device 100 may derive an adjustment angle based on the fitted adjustment feature information.

In a process S207, the adjustment angle derivation device 100 may post-process the point cloud data based on the derived adjustment angle.

In the descriptions above, the processes S201 to S207 may be divided into additional processes or combined into fewer processes depending on an embodiment. In addition, some of the processes may be omitted and the sequence of the processes may be changed if necessary.

The method for deriving an adjustment angle for a radar sensor installed in a vehicle illustrated in **FIG. 1** to **FIG. 4** can be implemented as a computer program stored in a medium to be executed by a computer or a storage medium including instructions executable by a computer.

The method for deriving an adjustment angle for a radar sensor installed in a vehicle described above with reference to FIG. 1 to FIG. 4 can be implemented in a computer program stored in a medium to be executed by a computer or a storage medium including instructions codes executable by a computer. Also, the method for deriving an adjustment angle for a radar sensor installed in a vehicle described above with reference to FIG. 1 to FIG. 4 can be implemented in a computer program stored in a medium to be executed by a computer.

A computer-readable medium can be any usable medium which can be accessed by the computer and includes all volatile/non-volatile and removable/non-removable media. Further, the computer-readable medium may include all computer storage and communication media. The computer storage medium includes all volatile/non-volatile and removable/non-removable media embodied by a certain method or technology for storing information such as computer-readable instruction code, a data structure, a program module or other data. The communication medium typically includes the computer-readable instruction code, the data structure, the program module, or other data of a modulated data signal such as a carrier wave, or other transmission mechanism, and includes a certain information transmission medium.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

1. A method for deriving an adjustment angle for a radar sensor installed in a vehicle, comprising:

   transmitting radar signals through the radar sensor during driving of the vehicle;
   receiving radar signals reflected from a target;
   generating point cloud data based on the received radar signals;
   deriving adjustment feature information based on the point cloud data;
   performing fitting of the adjustment feature information with respect to a cosine graph;
   deriving the adjustment angle based on the fitted adjustment feature information; and
   post-processing the point cloud data based on the derived adjustment angle.

2. The method of Claim 1, further comprising:

   deriving an absolute velocity of the point cloud data based on a velocity of the vehicle and a relative velocity of the point cloud data; and
   identifying whether the target is a stationary target based on the derived absolute velocity and a predetermined stationary target classification parameter.

3. The method of Claim 2, further comprising:
   accumulating the point cloud data corresponding to the target identified as a stationary target based on predetermined azimuth information.

4. The method of Claim 1,
   wherein the point cloud data include at least one of coordinate information of the target, relative velocity with respect to the target, and azimuth information of the target.

5. The method of Claim 4,
   wherein the deriving adjustment feature information includes:

   deriving a velocity of the vehicle and a range rate of the point cloud data based on the point cloud data; and
   deriving the adjustment feature information based on the velocity of the vehicle and the range rate.

# FIG. 1

# FIG. 2

*FIG. 3*

# FIG. 4

```
                    ┌─────────┐
                    │  START  │
                    └─────────┘
                         │
                         ▼
        ┌──────────────────────────────────┐
        │   TRANSMIT RADAR SIGNAL THROUGH   │── S201
        │ RADAR SENSOR DURING DRIVING OF VEHICLE │
        └──────────────────────────────────┘
                         │
                         ▼
        ┌──────────────────────────────────┐
        │ RECEIVE RADAR SIGNAL REFLECTED FROM TARGET │── S202
        └──────────────────────────────────┘
                         │
                         ▼
        ┌──────────────────────────────────┐
        │    GENERATE POINT CLOUD DATA BASED ON    │── S203
        │        RECEIVED RADAR SIGNAL       │
        └──────────────────────────────────┘
                         │
                         ▼
        ┌──────────────────────────────────┐
        │  DERIVE ADJUSTMENT FEATURE INFORMATION  │── S204
        │      BASED ON POINT CLOUD DATA     │
        └──────────────────────────────────┘
                         │
                         ▼
        ┌──────────────────────────────────┐
        │  PERFORM FITTING OF ADJUSTMENT FEATURE  │── S205
        │ INFORMATION WITH RESPECT TO COSINE GRAPH │
        └──────────────────────────────────┘
                         │
                         ▼
        ┌──────────────────────────────────┐
        │    DERIVE ADJUSTMENT ANGLE BASED ON    │── S206
        │  FITTED ADJUSTMENT FEATURE INFORMATION │
        └──────────────────────────────────┘
                         │
                         ▼
        ┌──────────────────────────────────┐
        │      POST-PROCESS POINT CLOUD DATA     │── S207
        │  BASED ON DERIVED ADJUSTMENT ANGLE │
        └──────────────────────────────────┘
                         │
                         ▼
                    ┌─────────┐
                    │   END   │
                    └─────────┘
```

Europäisches
Patentamt

European
Patent Office

Office européen
des brevets

# EUROPEAN SEARCH REPORT

**Application Number**

EP 25 21 7368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 228749 A (HITACHI LTD) 14 August 2002 (2002-08-14) * the whole document * | 1-5 | INV. G01S7/40 G01S13/42 G01S13/931 |
| X | DE 10 2011 015935 A1 (VALEO SCHALTER & SENSOREN GMBH [DE]) 4 October 2012 (2012-10-04) * abstract; figures 1-4 * * paragraphs [0017], [0051], [0054] - [0058], [0069] - [0070] * | 1-5 | |
| X | US 2011/068970 A1 (MITSUMOTO MASASHI [JP]) 24 March 2011 (2011-03-24) * abstract; figures 1-3 * * paragraphs [0014], [0020] - [0023], [0027] - [0033] * | 1-5 | |

**TECHNICAL FIELDS SEARCHED (IPC)**

G01S

The present search report has been drawn up for all claims

| Place of search | Date of completion of the search | Examiner |
|---|---|---|
| Munich | 11 March 2026 | Rodríguez González |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 7368

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2026

| Patent document cited in search report | Publication date | Patent family member(s) | | Publication date |
|---|---|---|---|---|
| JP 2002228749 A | 14-08-2002 | JP | 3733863 B2 | 11-01-2006 |
| | | JP | 2002228749 A | 14-08-2002 |
| DE 102011015935 A1 | 04-10-2012 | DE | 102011015935 A1 | 04-10-2012 |
| | | WO | 2012136494 A1 | 11-10-2012 |
| US 2011068970 A1 | 24-03-2011 | JP | 4827956 B2 | 30-11-2011 |
| | | JP | 2011064624 A | 31-03-2011 |
| | | US | 2011068970 A1 | 24-03-2011 |

EPO FORM P0459

For more details about this annex : see Official Journal of the European Patent Office, No. 12/82

**EP 4 749 323 A1**

**Patent documents cited in the description**

- KR 1020240168046
- KR 101746759